# EUROPEAN PATENT SPECIFICATION

(11) **EP 2 568 522 B1**
(45) Date of publication and mention of the grant of the patent: **17.04.2019**
(21) Application number: 11180955.4
(22) Date of filing: 12.09.2011
(51) Int. Cl.: H01M 16/00, H01M 8/04302, H01M 8/0438, H01M 8/04492, H01M 8/0432

(54) **Integrated starter element for a fuel cell in a handheld device**
Integriertes Starterelement für eine Brennstoffzelle in einer tragbaren Vorrichtung
Élément de démarrage intégré pour pile à combustible dans un dispositif portable

(43) Date of publication of application: 13.03.2013
(73) Proprietor: BlackBerry Limited, Waterloo, ON N2K 0A7 (CA)
(72) Inventor: Rich, David Gerard, West Bloomfield, Michigan 48322 (US)
(74) Representative: Hanna Moore + Curley

(56) References cited:
- WO-A2-2007/131227
- JP-A- 2010 238 408

## Description

The present disclosure relates generally to portable electronic devices. More particularly, the present disclosure relates to a method and apparatus for an integrated starter element for a fuel cell in a handheld device.

The use of fuel cells in portable electronic devices (and especially handheld devices, that is, devices sized to be held or carried in a human hand), has been contemplated and is still being researched and developed by various companies and scientists. The opportunity to have a portable electronic device, such as a mobile communication device like a cell phone or smart phone, which does not require a power cord for recharging, can be seen as a greener or more autonomous alternative. However, there are still some issues relating to the use of fuel cells within mobile communication devices which need to be addressed before they find wide-spread acceptance, especially when adapted to work with smaller, handheld devices.

JP 2010 238408 relates to providing a fuel cell system equipped with a piezoelectric valve capable of obtaining stable and highly reliable interruption operation of fuel, and to providing a piezoelectric valve device. WO2007/131227 A2 describes an energy harvesting system including piezoelectric ceramic fibres that harvest mechanical energy to provide electrical energy or power to operate one or more features of a portable electronic device.

### GENERAL

The current disclosure is directed generally at a method and apparatus starting of a fuel cell within a mobile communication device, which may be useful for (but is not necessarily limited to) emergency starts of a fuel-cell-powered device. In general, an emergency start occurs when there is a rapid or urgent need for power, such as power to make and sustain an emergency communication (such as a 9-1-1 call). In one embodiment, the starting apparatus includes a piezoelectric element, or charger, as an integrated fuel cell starter. By starting the fuel cell, a sustainable or larger energy source becomes available for the handheld device when the main battery is drained.

The present invention is defined in the appended claims.

Other aspects and features of the present disclosure will become apparent to those ordinarily skilled in the art upon review of the following description of specific embodiments of the disclosure in conjunction with the accompanying figures.

The adaptation of fuel cells to power portable electronic devices in general and to handheld devices in particular presents a number of challenges. One of those challenges pertains to starting the fuel cell. In contrast to conventional batteries, which are typically ready to supply power at once, some fuel cells need to get "started" before they can supply power. In general, starting entails moving fuel from a fuel cell tank-where fuel is stored-to the fuel cell itself. Once in the fuel cell, the fuel undergoes a reaction that generates electricity. The time for a fuel cell to get started need not be very long, but the delay in getting started may be an inconvenience to a user of the portable electronic device. In an extreme scenario, a delay in operation due to starting-even a delay of a matter of a few seconds-may be especially troublesome when a user wishes to make an emergency telephone call, but has to wait for the fuel cell to get started.

Fuel cells may become more difficult to start when they have been idle for long periods of time or when main power sources are drained or unavailable. External conditions such as temperature and humidity can also affect delays in starting. Consequently, a delay in starting may vary from time to time and place to place.

Generally, the present disclosure provides a method and system for an integrated starter for a fuel cell in a handheld, or portable, device, such as a mobile communication device that may be used in emergency situations. Inclusion of a fuel cell within a portable device allows a second power supply, such as a conventional battery or other power sources, to supply power for the portable electronic device as the fuel cell undergoes starting. In an alternative embodiment, the system may be used as an emergency starter when the second power supply is drained.

### BRIEF DESCRIPTION OF THE DRAWINGS

Embodiments of the present disclosure will now be described, by way of example only, with reference to the attached Figures, wherein:
Figure 1 is a schematic diagram of an apparatus for an emergency starting system for a fuel cell;
Figure 2 is a flowchart outlining a method of emergency starting of a fuel cell within a mobile communication device; and
Figure 3 is a flowchart outlining another method of emergency starting of a fuel cell within a mobile communication device.

### DETAILED DESCRIPTION

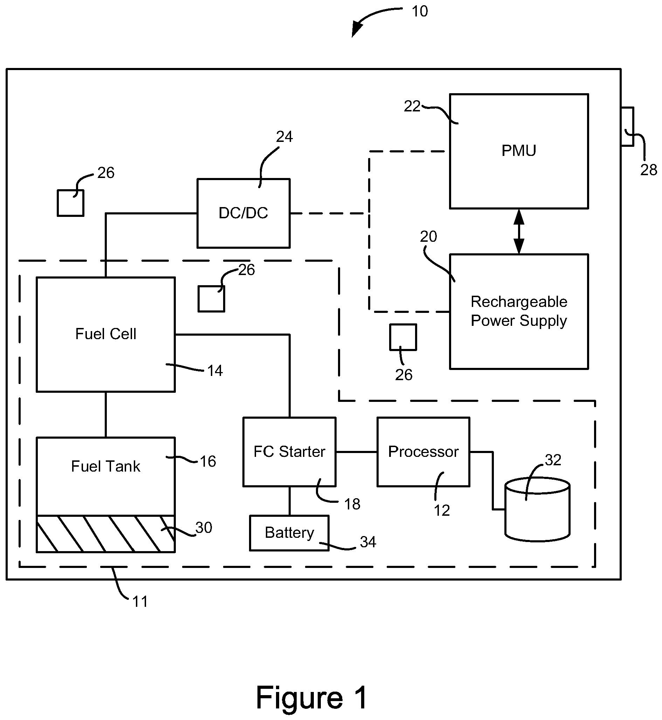

Turning to Figure 1, a schematic diagram of an apparatus for providing an integrated starter for a fuel cell in a portable device is shown. In general, the components may be electrically and/or physically connected to one another, although not all connections are necessarily shown in Figure 1. The portable electronic device 10, such as a mobile communication device, houses a starter system 11. In the embodiment depicted in Figure 1, the starter system 11 includes a processor 12, a fuel cell 14, a fuel tank 16 for holding fuel 30 for the fuel cell 14, and a fuel cell starter 18.

The fuel cell starter 18 includes at least one piezoelectric element (or "piezo"). In a typical variation, the fuel cell starter 18 can include a plurality of piezos. In general, a piezoelectric element can receive movement of a moving part as an input and can generates electric current as an output. In other words, piezos can convert mechanical energy into electrical energy, or vice versa. The piezoelectric element can be quite small and may be integrated into the portable electronic device 10 without significant loss of space for other components. A further potential advantage of a piezoelectric element is that a piezo can produce electric current, and thus electric energy, virtually immediately. The energy generated by the piezo can be harvested or stored in a storage device such as a rechargeable battery 34. Energy generated by the piezo may be directed to the rechargeable battery 34 to compensate for self-discharge or drainage of the rechargeable battery 34, or for later use. The energy generated by the piezo can also be supplied to the fuel cell 14 to start the fuel cell 14 or to initiate a fuel cell starting sequence. The energy generated by the piezo can further be used to activate a heater (not shown in Figure 1) that warms up the fuel 30 in the fuel tank 16, so that the fuel 30 can flow from the fuel tank 16 to the fuel cell 14. The energy may also be directed to a temperature control device (not shown in Figure 1) that affects the temperature of the fuel cell 14 itself. The energy from the piezo may be directed in one or more of these ways under the control of the processor 12. Instructions executed by the processor 12, and data that may be used by the processor 12, may be stored in one or more memory elements 32.

In the embodiment of Figure 1, the portable electronic device 10 includes a rechargeable power supply 20. The rechargeable power supply 20 may include, for example a rechargeable chemical battery (such as a lithium-ion battery) or one or more energy storage elements. Although depicted in Figure 1 as distinct from the battery 34 that may store energy generated by the fuel cell starter 18, battery 34 may be embodied as included within power supply 20. In one embodiment, the portable electronic device 10 may include a power management unit (PMU) 22. In some implementations, the processor 12 may serve as the PMU 22, but in Figure 1, they are depicted as distinct elements for clarity. The portable electronic device 10 can also include a DC/DC converter 24, which can receive energy at one voltage and output energy at one or more different voltages. The portable electronic device 10 can also include a set of sensors 26 such as fuel cell sensors, fuel tank sensors, or battery sensors, for monitoring various conditions within the device 10 such as, but not limited to, the temperature surrounding the fuel cell 14, the relative humidity surrounding the fuel cell 14, the ambient temperature surrounding the device 10, the power level of the battery 20, or the level of fuel remaining in the fuel tank 16. The device 10 can also include a user input device 28, embodied for example as a button located externally on the device 10, which can be activated by a user. Activation of the input device 28 allows a user to make a command to manually initiate the fuel cell starter 18. Furthermore, the processor 12 can be a central processing unit (CPU) or a micro-processor which is used for other functionality within the device 10 as well as for controlling the fuel cell starter 18. The portable electronic device 10 may include other components (such as a communication system implemented as a cell phone or data messaging system), but for simplicity these components are not shown.

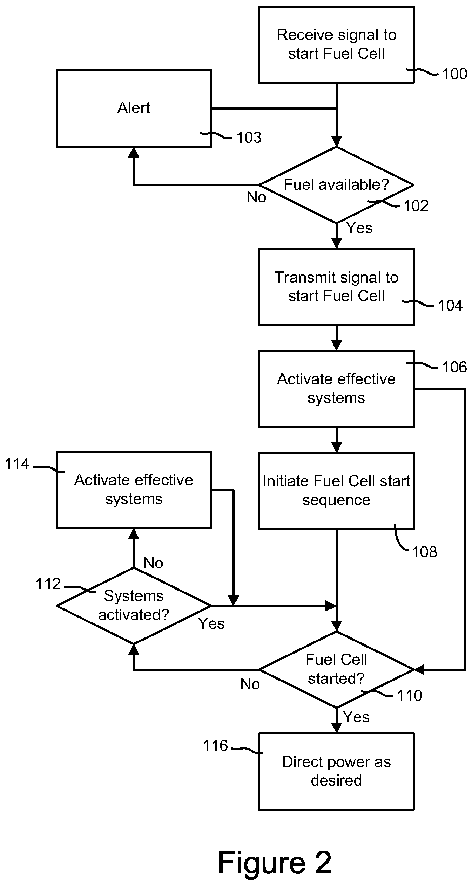

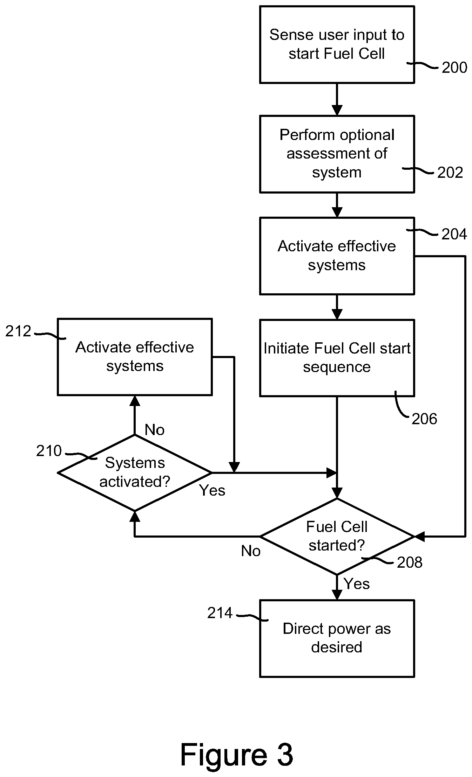

The processor 12 is connected to or in communication with the fuel cell starter 18 to transmit the necessary signals to start the fuel cell 14 once certain operational conditions are met. These operational conditions will be described in more detail below with respect to the flowcharts of Figure 2 or Figure 3.

The fuel cell 14 is connected to the fuel tank 16, which supplies the fuel 30, in a liquid or gaseous form, to assist in the generation of electricity by the fuel cell 14. The amount of fuel 30 can be monitored in any of several ways, and the processor 12 can be kept informed of the amount of fuel 30. The flow of fuel from the fuel tank 16 to the fuel cell 14 can be controlled by microfluidics. In general, the fuel cell 14 generates electric energy by a reaction between the fuel 30 and an oxidant. The electricity generated by the fuel cell can then be stored in the rechargeable power supply 20 or employed to supply power to electrical components within the device 10.

The optional DC/DC converter 24 and PMU 22 can be used to assist in regulating the power generated by the fuel cell 14 in accordance with the power requirements of the rechargeable power supply 20 or the device components. As shown in Figure 1, the output of the DC/DC converter 24 may be directly connected to the rechargeable power supply 20 or via the PMU 22. Alternatively, the output of the DC/DC converter 24 or the output of the PMU 22 can be connected to various device components.

In embodiments where the output of the fuel cell 14 (and/or other power elements) is used to power the electrical components of the device 10 either directly or through a combination of the DC/DC converter 24 and PMU 22, a condition may arise in which the output of the fuel cell 14 (or the DC/DC converter 24) is less than the power demand of the device components. In such a condition, the processor 12 may determine which device components should receive the available power. In other circumstances, the energy output of the fuel cell 14 may be greater than the energy demand of the device components. In those circumstances, the excess power can be managed via the PMU 22 and the energy output of the fuel cell may be reduced under the control of the processor 12 or the PMU 22.

Turning to Figure 2, a flowchart outlining a self-starting method of starting a fuel cell in a portable device is shown. This method may be useful in a variety of circumstances, including emergency situations. In operation, the processor 12 receives 100 an input signal to start the fuel cell 14. This input signal to start the fuel cell can be a result from any of several sources and can take any of several forms. For example, a signal from one of the set of sensors 26 may trigger the processor 12 to start the fuel cell 14. The signal may relate to operating conditions such as the temperature or relative humidity around the fuel cell 14, and the processor 12 may therefore start the fuel cell 14 as a response to those conditions. In another example, the processor 12 may receive a signal indicating that there is a large energy draw. Whether an energy draw is large may be a function of the energy stored in the rechargeable power supply 20, for example, or the applications or operations executed at the command of a user. In some circumstances, the signal that triggers the start of the fuel cell may come from a particular command by a user, via the user input 28. In a further example, an input signal may be generated by the fuel cell 14 or the fuel tank 18 in response to a change in operating conditions, such as in response to the addition of fuel 30 to the fuel tank 16. In another embodiment, the signal may be that the rechargeable power system is drained.

Once the input signal is received, the processor 12 determines 102 if there is a particular amount of fuel in the fuel tank 16 (or more). As noted previously the amount of fuel in the fuel tank 16 may be regularly monitored. Monitoring of the fuel level need not use very much power. If there is not enough fuel to start the fuel cell, an alarm or alert 103 can be generated by the processor 12. The alert may be manifested to the user in any of several ways, such an audible or visual notification. Additional power management procedures may be taken if the supply of fuel is low, but those are omitted for simplicity. This monitoring 102 of the fuel level can be regularly performed and does not have to be done only when the fuel cell 14 is to be started.

Assuming there is adequate fuel, the processor transmits 104 a start signal to the fuel cell starter 18 to start the fuel cell 14. The start signal controls the fuel cell starter 18. The processor 12 may (substantially contemporaneous with transmission of the start signal) also activate 106 components or effective systems. These effective systems include, but are not limited to, pumps, fans, heaters or a dessicator. Each of these systems can assist in the operation of the fuel cell 14 and fuel tank 16 to maintain or ensure that the fuel cell 14 operates within expected or desired operating conditions. Some of these systems may be of greater importance in the operation of a portable handheld electronic device than in fuel-cell-powered device of a larger scale. Activation of effective systems is optional or may be responsive to the existing circumstances, and in some cases fewer than all effective systems may be activated. As an illustration, if there is an ice buildup on the fuel cell, a heater may be activated; but if there is no ice buildup, it may be unnecessary to activate a heater.

When the fuel cell starter 18 receives the start signal, the starter 18 starts the fuel cell 14. The fuel cell starter includes a piezoelectric element which has generated energy that has been harvested or stored. The piezoelectric element is capable of generating energy when the device 10 is (for example) shaken or vibrated. Although shaking or vibrating may occur during ordinary operation of the portable electronic device 10, additional shaking may be appropriate for a device that has been sitting motionless for an extended period of time. In response to the start signal, the starter 18 supplies energy (which may include energy generated by motion and energy stored in the battery 34) to the fuel cell 14 to initiate a fuel cell starting sequence. In general, initiating the fuel cell starting sequence powers the effective systems to enable the fuel cell 14 to initiate its own energy generation. In a device having multiple fuel cells, each fuel cell 14 may have its own starting sequence, and the fuel cells may be started at different times or at the same time. The processor 12 may monitor the progress of the starting sequence and may determine whether energy is being produced by the fuel cell 14.

If, upon monitoring to determine 110 whether the fuel cell 14 has satisfactorily started and energy is being generated, the fuel cell 14 is determined not to have started, the processor 12 may perform a check to determine 112 if the effective systems were, or ought to be, activated. If the systems were not yet activated, a signal may be transmitted to control activation 114 of these systems or modify the operation of the systems to improve the fuel cell operating conditions. The processor may transmit 108 a new start signal to restart the fuel cell starting sequence. Under some circumstances, the processor 12 can determine 110 whether or not the fuel cell has started, and not try to start the fuel cell 14 again.

If the fuel cell has started, the energy is directed 116 by the processor 12. If the energy generated by the fuel cell 14 is supplied to power electronic components, the energy can be regulated by the power management unit 22 (PMU) or the DC/DC converter 24, or both.

As the starting sequence is in progress, energy for consumption by electronic components of the portable electronic device may be supplied by other sources, such as the battery 20. The processor 12 may control the directing of energy from the battery 20 to the other components. When the fuel cell 14 is started and is generating energy, the processor 12 may control the directing of energy from the fuel cell 14 to the components.

Turning to Figure 3, a flowchart outlining another embodiment of a method of starting a fuel cell within a portable electronic device is shown. In this embodiment, the start is expressly initiated by a user such as via the user input device 28. After the processor 12 senses 200 the user input or request to start the fuel cell 14, an assessment of various operating characteristics or conditions within the device is performed 202. This assessment can include, but is not limited to, a check of the temperature or fuel level of the fuel tank 16, a check of the temperature or relative humidity associated with the fuel cell 14, a check of the temperature or power level of the battery 20 or a check of the temperature or power level of the starter system battery 34.

After the assessment has been completed, a set of effective systems can be activated 204 by the processer 12. Which (if any) effective systems are activated may be a function of the assessment performed. For instance, if the temperature surrounding the fuel cell 14 is low, a heater can be started to raise the temperature surrounding the fuel cell 14. Even under limited power, the effective systems can often operate to maintain operating conditions for the fuel cell 14, the fuel tank 16 and other device components. The processor 12 transmits a start signal to initiate 206 the fuel cell starter 18 to start or execute the fuel cell starting sequence. After the starting sequence has commenced, a check 208 is performed to determine if the fuel cell 14 has started. If the fuel cell 14 has not started, a check is performed to determine if the effective systems were activated 210. If the systems were not yet activated, they can then be activated 212. The processor 12 may or may not transmit a new start signal.

If the fuel cell has started, then the energy can be directed 214 by the processor 12. Until the fuel cell 14 starts, energy for electronic components of the portable electronic device may be supplied by other sources, such as the battery 20.

The concepts, embodiments and variations described herein may realize one or more advantages. One potential benefit is that fuel cells may become more viable as power supplies for portable electronic devices in general and handheld electronic devices in particular. Fuel cells may provide greater energy storage than conventional batteries and may be replenished less often than conventional batteries. Fuel cells may offer greater efficiency than conventional batteries and less energy leakage. But fuel cells need not always be activated, and so there may be benefits to having them being capable of being deactivated and started. In addition to generating energy that may not be demanded, a fuel cell may produce by-products (such as water) that may be especially undesirable in the context of handheld devices. Further, fuel cells physically move fuel from a storage tank into the fuel cell, a process which involves some passage of time.

One or more of the embodiments described herein may enable convenient and relatively rapid starting or restarting of fuel cells. In a portable electronic device such as a smart phone, a prompt start of the fuel cell may be important in a number of situations in which there may sustained need for energy, such as (but not limited to) the situation in which there a user needs to make an emergency phone call. Various embodiments described herein may enable the user to draw temporarily upon another power supply, such as a rechargeable battery, while the fuel cell is started. As described in various embodiments, the starter may generate and/or harvest power on its own, independent of the other power supply, and may use this energy to start the fuel cell. In some circumstances, a user may be able to start the fuel cell and thereby obtain energy for a variety of device functions by shaking the portable electronic device.

Various embodiments of the concept may advantageously enable the starting to be triggered by one or more events. The triggering of starting may be automatic or may be in response to an explicit user command. Further, various embodiments may support a re-start in the event a first starting attempt fails, or may support not starting when that starting would be fruitless or detrimental.

In the preceding description, for purposes of explanation, numerous details are set forth in order to provide a thorough understanding of the embodiments of the disclosure. However, it will be apparent to one skilled in the art that some or all of these specific details may not be required in order to practice the disclosure. In other instances, well-known electrical structures and circuits are shown in block diagram form in order not to obscure the disclosure. For example, specific details are not provided as to whether the embodiments of the disclosure described herein are as a software routine, hardware circuit, firmware, or a combination thereof.
The above-described embodiments of the disclosure are intended to be examples only. Alterations, modifications and variations can be effected to the particular embodiments by those of skill in the art without departing from the scope of the disclosure, which is defined solely by the claims appended hereto.

## Claims

1. Apparatus comprising:
a fuel cell;
a fuel cell tank, connected to the fuel cell, arranged to supply fuel to the fuel cell;
a fuel cell starter connected to the fuel cell and fuel cell tank the fuel cell starter comprising an energy generating element that includes a piezoelectric element arranged to generate electrical energy; and
a processor, in communication with the fuel cell starter;
wherein the processor is arranged to transmit a start signal to the fuel cell starter, and wherein the fuel cell starter is arranged to start the fuel cell in response to the start signal and wherein the energy generating element is electrically coupled to an energy storage device that is arranged to store at least some energy generated by the energy generating element.

2. The apparatus of claim 1 further comprising a set of fuel cell sensors arranged to monitor fuel cell operating characteristics and to transmit the characteristics to the processor.

3. The apparatus of Claim 2 wherein the fuel cell operating characteristics comprise one or more of pressure, temperature or relative humidity associated with the fuel cell.

4. The apparatus of any preceding claim wherein the start signal is initiated via a user input.

5. The apparatus of any preceding claim further comprising a set of systems for assisting operation of the fuel cell.

6. The apparatus of Claim 5 wherein the systems comprise pumps, fans, heaters or a dessicator.

7. The apparatus of any preceding claim further comprising a power management unit for controlling delivery of fuel cell output and/or a DC/DC convertor connected to an output of the fuel cell to regulate the output of the fuel cell.

8. A method of starting a fuel cell, the fuel cell connected to a fuel cell tank and a fuel cell starter, and a processor, in communication with the fuel cell starter, comprising:
receiving an input signal to start the fuel cell;
determining (102) if a predetermined amount of fuel is remaining in the fuel tank after receiving the input signal;
transmitting (104) a start signal to a fuel cell starter (18) to start the fuel cell (14), wherein transmitting the start signal comprises supplying energy to the fuel cell to initiate a fuel cell starting sequence;
the fuel cell starter including a piezoelectric element, electrically coupled to an energy storage device, for generating electrical energy for harvesting to start the fuel cell or to store in the energy storage device; and
wherein in response to the start signal:
the fuel cell starter supplying energy generated by the piezoelectric element to start the fuel cell (14).

9. The method of Claim 8 wherein the input signal received from user input and/or the input signal is received from sensors monitoring fuel cell operating characteristics.

10. The method of Claim 8 further comprising:
producing an alert if the remaining amount of fuel in the fuel tank is less than the particular amount.

## Patentansprüche

1. Vorrichtung, umfassend:
eine Brennstoffzelle;
einen Brennstoffzellentank, der mit der Brennstoffzelle verbunden ist und ausgelegt ist, der Brennstoffzelle Brennstoff zu liefern;
einen Brennstoffzellenstarter, der mit der Brennstoffzelle und dem Brennstoffzellentank verbunden ist, wobei der Brennstoffzellenstarter ein Energieerzeugungselement umfasst, das ein piezoelektrisches Element enthält, das ausgelegt ist, elektrische Energie zu erzeugen; und
einen Prozessor in Kommunikation mit dem Brennstoffzellenstarter;
wobei der Prozessor ausgelegt ist, ein Startsignal an den Brennstoffzellenstarter zu senden, und wobei der Brennstoffzellenstarter ausgelegt ist, die Brennstoffzelle als Reaktion auf das Startsignal zu starten, und wobei das Energieerzeugungselement elektrisch an eine Energiespeichervorrichtung gekoppelt ist, die ausgelegt ist, mindestens etwas der Energie zu speichern, die vom Energieerzeugungselement erzeugt wird.

2. Vorrichtung nach Anspruch 1, ferner umfassend einen Satz von Brennstoffzellensensoren, die ausgelegt sind, die Betriebseigenschaften der Brennstoffzelle zu überwachen und die Eigenschaften an den Prozessor zu senden.

3. Vorrichtung nach Anspruch 2, wobei die Betriebseigenschaften der Brennstoffzelle eines oder mehrere von mit der Brennstoffzelle assoziiertem Druck, assoziierter Temperatur oder relativer Luftfeuchtigkeit umfassen.

4. Vorrichtung nach einem der vorangehenden Ansprüche, wobei das Startsignal über eine Benutzereingabe initiiert wird.

5. Vorrichtung nach einem der vorangehenden Ansprüche, ferner umfassend einen Satz von Systemen zum Unterstützen des Betriebs der Brennstoffzelle.

6. Vorrichtung nach Anspruch 5, wobei die Systeme Pumpen, Ventilatoren, Heizeinrichtungen oder einen Exsikkator umfassen.

7. Vorrichtung nach einem der vorangehenden Ansprüche Ansprüche, ferner umfassend eine Energieverwaltungseinheit zum Regeln einer Lieferung der Brennstoffzellenausgabe und/oder einen Gleichspannungswandler, der mit einem Ausgang der Brennstoffzelle verbunden ist, um die Ausgabe der Brennstoffzelle zu regeln.

8. Verfahren zum Starten einer Brennstoffzelle, wobei die Brennstoffzelle mit einem Brennstoffzellentank und einem Brennstoffzellenstarter sowie einem Prozessor in Kommunikation mit dem Brennstoffzellenstarter verbunden ist, umfassend:
Empfangen eines Eingangssignals, um die Brennstoffzelle zu starten;
Ermitteln (102), ob eine vorbestimmte Menge an Brennstoff nach Empfangen des Eingangssignals im Brennstofftank verbleibt;
Senden (104) eines Startsignals an einen Brennstoffzellenstarter (18), um die Brennstoffzelle (14) zu starten, wobei das Senden des Startsignals ein Liefern von Energie an die Brennstoffzelle umfasst, um eine Brennstoffzellen-Startsequenz zu initiieren;
wobei der Brennstoffzellenstarter ein piezoelektrisches Element enthält, das elektrisch an eine Energiespeichervorrichtung gekoppelt ist, zum Erzeugen von elektrischer Energie zur Gewinnung, um die Brennstoffzelle zu starten oder um sie in der Energiespeichervorrichtung zu speichern; und
wobei als Reaktion auf das Startsignal:
Liefern von vom piezoelektrischen Element erzeugter Energie durch den Brennstoffzellenstarter, um die Brennstoffzelle (14) zu starten.

9. Verfahren nach Anspruch 8, wobei das Eingangssignal von einer Benutzereingabe empfangen wird und/oder das Eingangssignal von Sensoren empfangen wird, die die Betriebseigenschaften der Brennstoffzelle überwachen.

10. Verfahren nach Anspruch 8, ferner umfassend:
Erzeugen einer Warnung, falls die verbleibende Brennstoffmenge im Brennstofftank unter der bestimmten Menge liegt.

## Revendications

1. Appareil comprenant :
une pile à combustible ;
un réservoir de pile à combustible, relié à la pile à combustible, agencé pour fournir du combustible à la pile à combustible ;
un élément de démarrage de pile à combustible relié à la pile à combustible et au réservoir de pile à combustible, l'élément de démarrage de pile à combustible comprenant un élément de génération d'énergie qui comprend un élément piézoélectrique agencé pour générer de l'énergie électrique ; et
un processeur, en communication avec l'élément de démarrage de pile à combustible ;
le processeur étant agencé pour émettre un signal de démarrage vers l'élément de démarrage de pile à combustible, et l'élément de démarrage de pile à combustible étant agencé pour démarrer la pile à combustible en réponse au signal de démarrage, et l'élément de génération d'énergie étant couplé électriquement à un dispositif de stockage d'énergie qui est agencé pour stocker au moins une partie de l'énergie générée par l'élément de génération d'énergie.

2. Appareil selon la revendication 1, comprenant en outre un ensemble de capteurs de pile à combustible agencés pour surveiller des caractéristiques de fonctionnement de pile à combustible et pour transmettre les caractéristiques au processeur.

3. Appareil selon la revendication 2, dans lequel les caractéristiques de fonctionnement de pile à combustible comprennent une ou plusieurs parmi une pression, une température ou une humidité relative associées à la pile à combustible.

4. Appareil selon l'une quelconque des revendications précédentes, dans lequel le signal de démarrage est initié par l'intermédiaire d'une entrée d'utilisateur.

5. Appareil selon l'une quelconque des revendications précédentes, comprenant en outre un ensemble de systèmes pour aider au fonctionnement de la pile à combustible.

6. Appareil selon la revendication 5, dans lequel les systèmes comprennent des pompes, des ventilateurs, des éléments chauffants ou un dessiccateur.

7. Appareil selon l'une quelconque des revendications précédentes, comprenant en outre une unité de gestion d'alimentation pour commander la distribution de sortie de pile à combustible et/ou un convertisseur CC/CC relié à une sortie de la pile à combustible pour réguler la sortie de la pile à combustible.

8. Procédé de démarrage d'une pile à combustible, la pile à combustible étant reliée à un réservoir de pile à combustible et à un élément de démarrage de pile à combustible, et un processeur, en communication avec l'élément de démarrage de pile à combustible, comprenant :
recevoir un signal d'entrée pour démarrer la pile à combustible ;
déterminer (102) si une quantité prédéterminée de combustible reste dans le réservoir de combustible après la réception du signal d'entrée ;
émettre (104) un signal de démarrage vers un élément de démarrage de pile à combustible (18) pour démarrer la pile à combustible (14), l'émission du signal de démarrage comprenant fournir de l'énergie à la pile à combustible pour initier une séquence de démarrage de pile à combustible ;
l'élément de démarrage de pile à combustible comprenant un élément piézoélectrique, couplé électriquement à un dispositif de stockage d'énergie, pour générer de l'énergie électrique à prélever pour démarrer la pile à combustible ou pour stocker dans le dispositif de stockage d'énergie ; et
en réponse au signal de démarrage :
l'élément de démarrage de pile à combustible fournissant de l'énergie générée par l'élément piézoélectrique pour démarrer la pile à combustible (14).

9. Procédé selon la revendication 8, dans lequel le signal d'entrée est reçu en provenance d'une entrée d'utilisateur et/ou le signal d'entrée est reçu en provenance de capteurs surveillant des caractéristiques de fonctionnement de pile à combustible.

10. Procédé selon la revendication 8, comprenant en outre :
produire une alerte si la quantité restante de combustible dans le réservoir de combustible est inférieure à la quantité particulière.
